# EUROPEAN PATENT APPLICATION

(11) **EP 2 450 924 A1**
(43) Date of publication of application: **09.05.2012**
(21) Application number: 11166918.0
(22) Date of filing: 20.05.2011
(51) Int. Cl.: H01G 9/058

(54) **A method for producing an electrode of a capacitor, in particular a super-capacitor**

(30) Priority: 08.11.2010 EP 10190395
(71) Applicant: Paul Scherrer Institut, 5232 Villigen (CH); ETH Zurich, 8092 Zurich (CH)
(72) Inventor: Hantel Moritz Maximilian, 5426 Lengnau (CH); Kaspar Tommy, 8887 Mels (CH); Kötz Rüdiger, 5316 Gippingen (CH); Nesper Reinhard, 8873 Amden (CH)
(74) Representative: Fischer, Michael

(57) **Abstract**

Partially reduced graphite oxide (GOpr) prepared from natural as well as synthetic graphite was used as electrode material for supercapacitors in 1 M Et4NBF4 in acetonitrile electrolyte. As a function of the degree of reduction of graphite oxide (GO) the graphite layer distance was varied between 0.46 and 0.33 nm. The initial specific capacitance of all samples was negligibly small around the open circuit potential, which was in agreement with the small BET surface area of the reduced GO powder of around 5 m2/g. During the first potential cycle, however, electrochemical activation resulted in a specific capacitance of up to 220 F/g for samples with a graphene layer distance of 0.44 nm. The potential for anodic and cathodic electrochemical activation was found to be a function of the GO layer distance. Dilatometrie investigations showed a significant swelling and shrinking of the samples.

## Description

The present invention relates to a method for producing an electrode of a capacitor, in particular a super-capacitor.

Electrochemical activation of carbons for supercapacitor electrodes was first described for mesophase coal tar pitch-derived coke (MPC) as precursor material. The preparation of the material and some characterization is described in the US patent application US 2002/0039275 A1 by Takeuchi et al. Some years later this material and the electrochemical activation process were rediscovered in conjunction with the so called Nanogate Capacitor utilizing patented Nanogate Carbon®. The Nanogate Capacitor was expected to work at cell voltages of 3.5 V and above and to provide a specific energy of 27 Wh/kg with a specific power of 8 kW/kg.

During electrochemical activation the original carbon precursor material with a small surface area of below 100 m²/g and a rather small capacitance develops a significant capacitance if the potential is driven beyond the critical value for activation. This effect can be irreversible. The resulting material was assumed to be electrochemically more stable than activated carbon and to allow to build a capacitor which works at a cell voltage of 3.5 V or higher. In an early paper by Takeuchi et al. the effect of layer spacing on the performance of the activated carbon was also studied and the resulting effect was ascribed to ion and solvent intercalation (see US 2002/0039275 A1).

The electrochemical activation effect was further investigated for mesophase pitch-derived activated carbon using in situ SAXS and in situ dilatometry. The KOH activated carbon showeda specific capacitance of around 150 F/g after electrochemical activation and exhibited an irreversible volume expansion during activation of 24%. The increased capacitance after activation was primarily attributed to pores between the graphitic units which were not accessible before activation. Starting from needle coke a graphite oxide was produced with an interlayer distance of 0.36 nm, which exhibited electrochemical activation at a cell voltage of 1.0 V. Further, expanded MCMB (mesocarbon microbeads) was investigated with an interlayer distance of 0.404 nm using dilatometrie and impedance spectroscopy and described the electrochemical activation in a special electrolyte, which was a mixture of tetraethyl ammonium tetrafluoroborate (Et4NBF4, 0.95 M) and lithium tetrafluoroborate (LiBF4, 0.05 M) that was dissolved in propylene carbonate (PC). The specific capacitance of these electrodes was around 100 F/cm3.

It is therefore an object of the present invention to provide a method for producing an electrode of a capacitor, in particular a super-capacitor, that can deliver an electrode material having a high capacitance and being rather simple in terms of the production process.

These objectives are achieved according to the present invention by a method for producing an electrode of a capacitor, in particular a super-capacitor, comprising the steps of:
a) preparing graphite oxide from natural graphite or from synthetic graphite by dispersing the natural graphite or the synthetic graphite in an aqueous solution of natrium chlorate NaClO₃ and fuming nitride acide HNO₃ at an elevated temperature as compared to room temperature;
b) drying the graphite oxide and thermally reducing the dried graphite oxide in an inert gas atmosphere by heating the graphite oxide between 200 and 1000 °C,
c) obtaining a partially reduced graphite oxide in form of a fine black powder of low bulk density;
d1) assembling the obtained partially reduced graphite oxide as a powder electrode; or
d2 assembling the obtained partially reduced graphite oxide to a PTFE-bound electrode.

This method yields in result a partially reduced graphite oxide that has a rather high capacitance in the range of more than 200 F/g. The method is rather to simple to be accomplished and the electrochemical activiation reproducible for different lots of graphite oxides.

A suitable inert gas atmosphere can be achieved when the inert gas atmosphere is a noble gas atmosphere, preferably an argon gas atmosphere.

A suitable way to produce a PTFE-bound electrode can be achieved when the PTFE-bound electrode is prepared from a suspension, containing 80 wt.% partially reduced graphite oxide, 10 wt.% conductive agent and 10 wt.% PTFE binder, such as 60 wt.% PTFE solution dispersed in ethanol, by evaporating the solvent, preferably under constant stirring, and rolling the obtained compound to an electrode with a thickness in the range of 200 to 1000 µm, and finally drying the rolled electrode for 1 to 24 h at 80 to 180 °C under vacuum at about 10 to 1000 Pa.

Experimental data have shown that the capacitance of the electrode reaches the desired level when the thickness of the electrode is in the range of 400 to 600 µm. Suitable reaction conditions can be chosen to be for the drying of the rolled electrode to be carried out for 1 to 5 hours at temperature in the range of 100 to 150°C and under vacuum in the range of 50 to 200 Pa. The method for producing a capacitor assembly is preferably preformed when filling of an electrolyte is performed under a noble gas atmosphere and by using 1 M Et₄NBF₄ in acetonitrile as electrolyte.

The capacitance in the range of 220 F/g has been identified to depend largely of the interlayer distance of the partially reduced graphite oxide used for the electrode assembly. According to a preferred embodiment of the present invention, the partially reduced graphite oxide to be used for the assembly of an electrode is chosen to have an interlayer distance in the range of 0.3 to 0.6 nm, preferably in the range of 0.4 to 0.5 nm whereas this interlayer distance has been identified prior to the activation of the so-generated supercapacitor electrodes.

Preferred embodiments of the present invention are hereinafter described with more detail and with reference to the following drawings which depict in:
- Figure 1: two cyclic voltammograms of graphite (SFG44, top, shifted upwards for clarity) and GOpr44 (bottom) in 1 MEt4NBF4 in acetonitrile for the first and second cycle; the CVs were recorded separately for the positive and negative potential range, Scan rate 1mV/s;
- Figure 2: the dimensional changes of GOpr44 during the first three cycles in the positive and the negative potential range;
- Figure 3: the anodic and cathodic electrochemical activation potential as a function of interlayer spacing for various GOpr and graphite (3.3 Å) in 1 M Et4NBF4 in acetonitrile for natural and synthetic graphite; and
- Figure 4: a cyclic voltammogram for GOpr44 in 1 MEt4NBF4 in acetonitrile, Scan rate: 1 mV/s.

In the present application it is shown that graphite oxide (GO) from natural as well as from synthetic graphite is an excellent precursor for partially reduced graphite oxide (GOpr) and that the GOpr shows electrochemical activation similar to the mesophase coal tar pitch-derived coke (MPC). Thus, a well-characterized and controllable precursor (synthetic graphite) is available to investigate and utilize the electrochemical activation of graphitic materials to the full. Contaminations of the resulting GOpr electrode material, by unwanted components such as amorphous or activated carbon, which may cause a stability problem for the capacitor, can be widely controlled.

In addition, oxidation and subsequent partial reduction of the graphite precursor allow to investigate the effect of the initial lattice expansion on the electrochemical activation and on the resulting capacitance. Within the context of the present invention, it will be shown that the activation potential for the anode as well as for the cathode depends directly on the degree of reduction of the GO. It will be also demonstrate that a specific electrode capacitance beyond 200 F/g can be achieved in standard organic 1 M Et4NBF4 in acetonitrile electrolyte.

Graphite oxide (GO) was prepared from natural graphite (Alfa Aeser; 200 mesh, 99,9995 metal basis) as well as from synthetic graphite (TIMCAL; Timrex SFG44) according to a modified Brodie method. In deviation from the original method NaClO3 (Sigma-Aldrich, puriss. p.a.) was used instead of KC103. The interlayer distance of the thus prepared GO was 6.1 Å. The dried GO (2 g) was thermally reduced in an argon atmosphere by heating GO between 200 and 1000 °C depending on the final layer distance, between 0.46 and 0.33 nm. GOpr was obtained as a fine black powder of low bulk density. The layer distance of the GOpr was determined by XRD (STOE STADI P2, transmission-mode, CuKα) and the surface area by BET (Autosorb-1 from Quantachrome Instruments, USA).

GOpr materials were assembled to PTFE-bound electrodes as well as directly used as powder electrodes. Each bound electrode was prepared from a suspension, containing 80 wt.% active material (GOpr as received), 10 wt.% conductive agent (Super P; TIMCAL) and 10 wt.% PTFE binder (60 wt.% PTFE solution; Alfa Aeser ) dispersed in ethanol (analytic grade). The solvent was then evaporated under constant stirring and the obtained compound was rolled to an electrode with a thickness of 500 µm. Finally the electrode was dried for 12 h at 120 °C under vacuum at 103 Pa.

For the electrochemical characterization a three electrode setup was used, employing an in-house designed and manufactured electrochemical cell. The setup was always consisting of an oversized counter electrode, PTFE-bound activated carbon (YP17; Kuraray Chemical Co., Japan), as well as a carbon quasi-reference from the same material. The potential of the quasi-reference was measured to be 3.0±0.05 V vs. Li/Li+in the used electrolyte of 1M Et4NBF4 in acetonitrile.

A glass fiber separator was sandwiched between the electrodes which were contacted by Ti pistons. After assembling, the cell was dried for 12 h at 120 °C under vacuum at 103 Pa. The electrolyte filling with 1 M Et4NBF4 in acetonitrile took place in an argon-filled glove box containing less than 1 ppm H₂O and O₂. The electrochemical characterization was done by using an IM6e potentiostat (Zahner-Elektrik GmbH & Co. KG, Germany). During cyclic voltammetry a sweep rate of 1 mV/s was routinely used. The investigated electrode was either cathodically (negative sweep to -2.0 V vs. carbon) or anodically (positive sweep to 1.6 V vs. carbon) activated. After the activation full cycle experiments were performed with increasing potential range, starting with a potential window close to 0 V vs. carbon and rising stepwise up to 3.6 V.

The expansion behavior of the investigated GOpr during electrochemistry was measured with an in-house constructed dilatometer. Apart from the different cell design the setup of the measurements was kept unchanged compared to the electrochemical characterization.

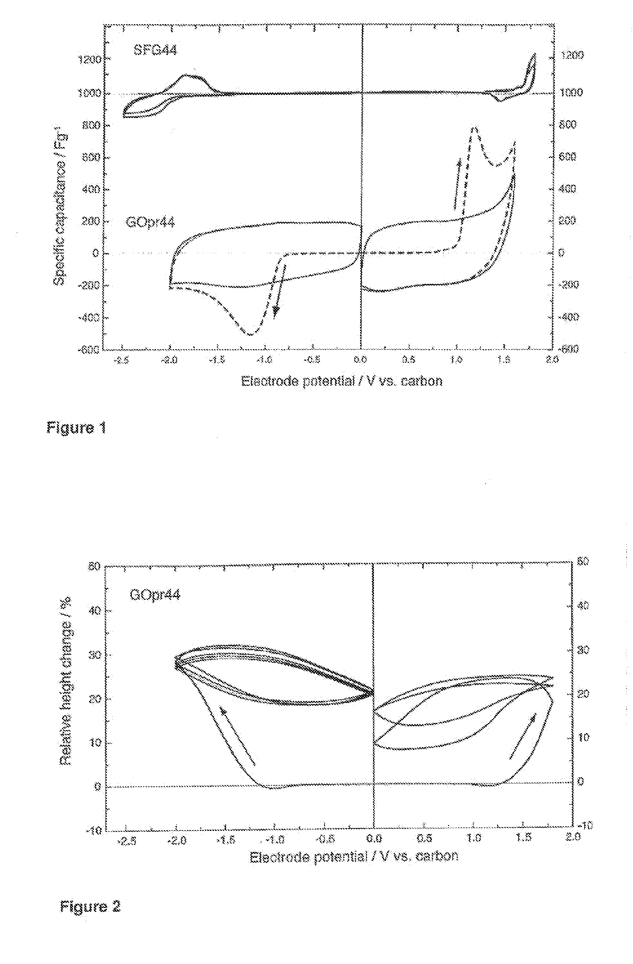

Electrochemical activation of partially reduced graphite oxides (GOpr) with a layer distance of 4.4 Å is shown in Fig. 1 for cathodic and anodic activation together with the cyclic voltammograms of the starting material SFG44 (Fig. 1, top). During the beginning of the cycle around 0 Vvs. the carbon reference the capacitance is almost negligible at the beginning of the scan until a large negative or positive current peak is observed for both, the cathodic and anodic scan, respectively. This current maximum represents the activation process. After activation the capacitance is significantly increased and remains large for the subsequent cycles.

As described earlier in the US patent application US 2002/0039275 A1 for pitch-derived mesophase carbon the activation step is accompanied by a rather significant expansion of the electrode material generating internal stress. The dimensional changes of a GOpr with a layer distance of 4.4 Å are reproduced in Fig. 2. Dimensional changes are measured in the order of 28% and 17% for cathodic and anodic activation, respectively, and are comparable to the earlier results on activated pitch-derived mesoporous carbon. For the negative activation the irreversible swelling is followed by a reversible swelling of about 12% during successive cycling. For the positive activation the reversible swelling amounts to about 10%. The overlay of an irreversible expansion with a smaller reversible thickness change was already observed earlier although in a different electrolyte.

For various GOpr with different degree of reduction and consequently with different layer distance the electrochemical activation process was investigated by means of CV and determined the corresponding activation potentials.

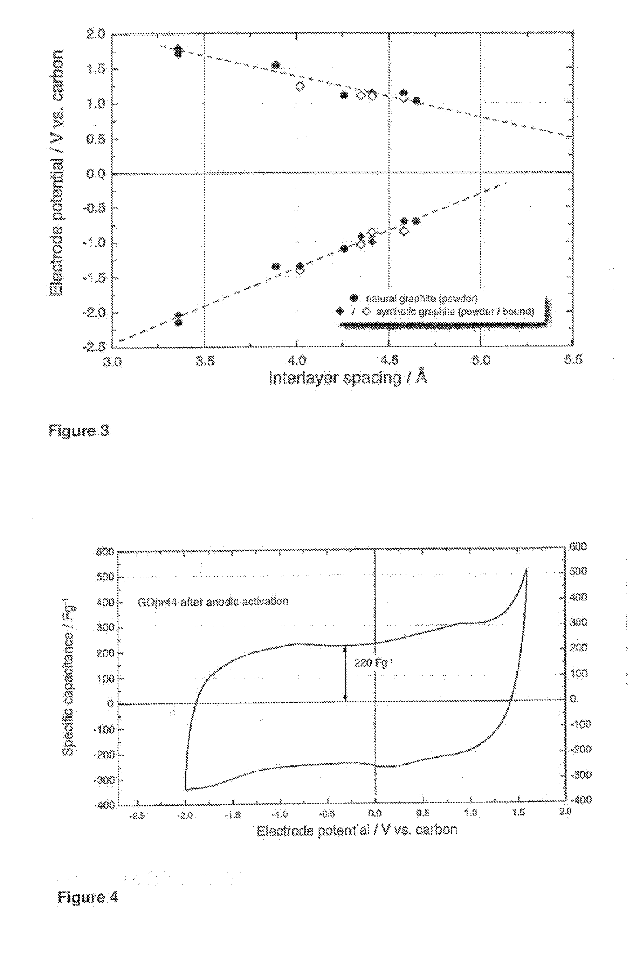

Fig. 3 shows the anodic as well as cathodic activation potential as a function of the layer distance of the investigated GOpr, of the starting materials and as a function of electrode preparation with and without binder. The activation potential clearly decreases with increasing layer distance for negative as well as for positive activation. However, the slope of negative and positive activation is different. The results are obviously independent of the kind of graphite - natural or synthetic - used as precursor material. Takeuchi et al. presented a similar investigation of the activation voltage of a petroleum based needle coke as a function of the lattice spacing. However, these authors varied the interlayer distance between 0.36 and 0.38 nm only and determined the activation voltage of a complete capacitor cell. The observed trend of a decreasing activation voltage with an increased layer distance is in accord with the present investigations of the applicants. In order to demonstrate that the electrochemical activation is irreversible and useful for supercapacitor electrodes, the full CV after activation was recorded for the different samples. The full CV for the GOpr sample, which exhibited the highest specific capacitance with a lattice spacing of 4.4 Å, is reproduced in Fig. 4 for a potential window of 3.6 V. The achieved specific capacitance of 220 F/g at 0 V vs. the carbon reference is rather large. This value is the highest specific capacitance ever reported for an activated carbon material in organic aprotic electrolyte.

Assuming pure double layer charging (no pseudo capacitance) and a specific double layer capacitance (DLC) of 8 µF/cm² the above GOpr sample has a surface area of 2687 m²/g, which is close to the theoretical surface area of graphene of 2630 m2/g when exposed on both sides. Therefore, it has to be concluded that both sides of the graphene like layers in our GOpr are utilized for double layer charging and provide the respective capacitance. GOpr contains a certain amount of oxygen containing functional groups and the assumption of a lack of pseudo capacitive contributions has to be verified. It has been demonstrated, however, that the contribution to the specific capacitance of such groups can be neglected in organic electrolyte. In addition, the assumption of a specific double layer capacitance of 8 µF/cm2 is based on results obtained on the basal planes of graphite. The specific DLC of graphene like materials has to be determined yet and might be very different like other properties of graphene are exceptional.

The clear dependence of the activation potential of GOpr on the lattice spacing indicates that the electrochemical activation is - at least in part - related to ion and/or solvent intercalation. GOpr with an interlayer distance of 4.4 Å is an excellent material for electrochemical double layer capacitors with a specific low frequency capacitance of 220 F/g and a potential window well beyond 3.0 V. Natural as well as synthetic graphite are good precursors for the preparation of GO based electrodes.

## Claims

1. A method for producing an electrode of a capacitor, in particular a super-capacitor, comprising the steps of:
a) preparing graphite oxide from natural graphite or from synthetic graphite by dispersing the natural graphite or the synthetic graphite in an aqueous solution of natrium chlorate NaClO₃ and fuming nitride acide HNO₃ at elevated temperature;
b) drying the graphite oxide and thermally reducing the dried graphite oxide in an inert gas atmosphere by heating the graphite oxide between 50 and 1000 °C,
c) obtaining a partially reduced graphite oxide in form of a fine black powder of low bulk density;
d1) assembling the obtained partially reduced graphite oxide as a powder electrode; or
d2 assembling the obtained partially reduced graphite oxide to a PTFE-bound electrode.

2. The method according to claim 1 wherein the inert gas atmosphere is a noble gas atmosphere, preferably argon gas atmosphere.

3. The method according to claim 1 or 2 wherein the PTFE-bound electrode is prepared from a suspension, containing 80 wt.% partially reduced graphite oxide, 10 wt.% conductive agent and 10 wt.% PTFE binder, such as 60 wt.% PTFE solution dispersed in ethanol, by evaporating the solvent, preferably under constant stirring, and rolling the obtained compound to an electrode with a thickness in the range of 200 to 1000 µm, and finally drying the rolled electrode for 1 to 24 h at 80 to 180 °C under vacuum at about 10 to 1000 Pa.

4. The method according to claim 3, wherein the thickness of the electrode is in the range of 400 to 600 µm.

5. The method according to claim 3, wherein the drying of the rolled electrode is carried out for 1 to 5 hours at temperature in the range of 100 to 150°C and under vacuum in the range of 50 to 200 Pa.

6. The method according to any of the preceding claims, wherein a filling of an electrolyte is performed under a noble gas atmosphere and by using 1 M Et₄NBF₄ in acetonitrile as electrolyte.

7. The method according to any of the preceding claims, wherein the partially reduced graphite oxide is chosen to have an interlayer distance in the range of 0.3 to 0.6 nm, preferably in the range from 0.4 to 0.5 nm.
